# EUROPEAN PATENT SPECIFICATION

(11) **EP 2 001 770 B1**
(45) Date of publication and mention of the grant of the patent: **15.06.2011**
(21) Application number: 07747357.7
(22) Date of filing: 23.03.2007
(51) Int. Cl.: B65G 17/00, B65G 17/24, B65G 47/26, B65G 47/88

(54) **CONVEYOR FOR CONVEYING AND BUFFERING PRODUCTS**
FÖRDERER ZUR FÖRDERUNG UND PUFFERUNG VON PRODUKTEN
CONVOYEUR POUR CONVOYER ET STOPPER DES PRODUITS

(30) Priority: 23.03.2006 NL 2000035
(43) Date of publication of application: 17.12.2008
(73) Proprietor: Ambaflex International B.V., 1689 AN Zwaag (NL)
(72) Inventor: BALK, Wouter, 1396 JK Baambrugge (NL)
(74) Representative: Hesselink, Dinah Elisabeth
(86) International application number: PCT/NL2007/050126
(87) International publication number: WO 2007/108691

(56) References cited:
- DE-A1- 3 823 488
- DE-C1- 4 117 509
- FR-A1- 2 071 993
- GB-A- 1 539 024

## Description

The invention relates to a conveyor for conveying and buffering products, such as boxes or crates, which is provided with a frame, a plurality of supports which are supported by the frame and movable with respect to the frame in a conveying direction by driving means, said supports being spaced from each other and connected to each other, and each of the supports can support at least one product, and an obstruction for obstructing a first product in the conveying direction, wherein the frame is provided with a supporting surface, and the supports and the supporting surface are arranged such and are positioned with respect to each other such, that the product is free from the supporting surface when the products is carried by one of the supports and rests on the supporting surface when the supports are spaced from the product.

Such a conveyor is know from the patent GB-1,024,008. This document discloses a conveyor which is provided with a pair of driven chains which are disposed parallel to each other, on which chains rotatable wheels are provided which can support a carriage. Each support is formed by four wheel. The carriage has such a shape that the wheels engage with two guides disposed at a bottom side of the carriage, which guides extend in the conveying direction of the conveyor at the bottom side of the carriage. The products which need to be transported have to be placed on the carriage in case of the prior art conveyor. This means that the products must always be transported by means of the carriages and the conveyor is not suitable for directly conveying products which differ from the shape and the size of the carriages.

DF 14 17 509 is related to a conveyor belt which has cross-bores for axes to take roller holders for the opposite rail-guided support and rollers. The material on the transport plates bears on the rollers and is supported by the rails. Each roller holder on the axis of the two support rollers is swivelably mounted and has at both ends a roller axis with a pressure roller.

DE 4117 509 discloses a conveyor according to the preamble of claim 1.

The object of the invention is to provide a conveyor which is also suitable for conveying products which have a limited dimensionally stable shape.

In order to achieve this, but being not part of the present invention, each of the supports comprises a set of elongated rollers which are freely rotatable and attached to a conveying member to which the supports are connected, wherein each of the rollers includes an axis of rotation which extends perpendicular to the conveying direction and parallel to the supporting surface.

As a consequence of these features the conveyor is also suitable to convey products which have a limited dimensionally stable shape, such as products having a weak bottom and the like. Besides, the conveyor is normally suitable for products which have a dimensionally stable shape. However, it is not necessary that the products must have a single predetermined shape, as in case of the container in the above-mentioned prior art, such that the conveyor is also flexible to receive products having a different shape. The elongated rollers cause a relatively large bearing surface under a product such that possible sagging of the bottom during conveying is avoided. Besides, due to the load distribution in case of elongated rollers the concentrated load on the product is limited. An elongated roller is for example defined by a longer width of the running surface of the roller than its diameter, but in practice the width will often be a number of times longer than the diameter.

In a practical embodiment the end portions of the rollers are adjacent to the supporting surface. As a consequence, possible sagging of the side edge portion of a product bottom above the supporting surface is minimized, such that the risk of grating of the side edge portion over the supporting surface during transport is minimized.

Preferably, the set of rollers comprises at least three rollers which are disposed in parallel behind each other, because the bearing surface of the support is also relatively large in the conveying direction in this case.

The distance between the rollers may be similar. In practice a bed of rollers which are disposed closely to each other will be advantageous because of a large bearing surface such that the product is supported optimally, which may be relevant for products which have a limited dimensionally stable shape.

In an alternative practical embodiment the supporting surface is formed by two portions of the frame which extend in the conveying direction and are spaced from each other, between which portions the rollers are disposed, and the rollers have a length which extends over the largest part of the distance between the portions of the supporting surface. As a consequence, a supporting surface which is as large as possible in transverse direction of the conveying direction is obtained.

In still another embodiment at least two rollers are disposed behind each other as seen along the centre lines of these rollers, and at least one of the at least two rollers is supported by at least two supporting members on the conveying member which are disposed axially of the rollers and spaced from each other. The advantage of this configuration is that the load distribution of the product over the transverse direction of the support is distributed over several rollers, such that the conveying member on which the supporting members or roller bearing members support, are loaded more evenly.

An alternative embodiment of the conveyor is provided with a frame, a plurality of movable supports which are supported by the frame and movable by driving means with respect to the frame in a conveying direction, which supports are spaced from each other and connected to each other and each support can support at least one product on a bearing surface of the support, and an obstruction for obstructing a first product in the conveying direction, wherein the frame is provided with a supporting surface, and the supports and the supporting surface are adapted such and positioned with respect to each other such, that the product is free from the supporting surface when the product is carried by one of the supports and rests on the supporting surface when the supports are spaced from the product, and wherein the supports at the frontal side which faces the conveying direction are provided with a guiding surface which extends downwardly from substantially the bearing surface of the support to at least the height level of the supporting surface of the frame, which guiding surface has a normal having a vertical component. This embodiment is characterized in that the surface condition of the guiding surface and that of the supporting surface is such, that the friction with a product is lower at the guiding surface than at the supporting surface. As a consequence, the product is lifted by the support more easily than pushed forward over the supporting surface. In addition to the surface condition, the shape of the guiding surface is also relevant for lifting a product as easy as possible, of course. The bearing surface can be formed by a set of rollers or by a sliding surface which is stationary with respect to the support, for example.

The conveyor according to the invention is provided with a frame, a plurality of supports which are supported by the frame and drivable by driving means with respect to the frame in a conveying direction, which supports are spaced from each other and connected to each other and each of the supports can support at least one product on a bearing surface of the support, and an obstruction for obstructing a first product in the conveying direction, wherein the frame is provided with a supporting surface, and the supports and the supporting surface are adapted such and positioned with respect to each other such, that the product is free from the supporting surface when the product is carried by one of the supports and rests on the supporting surface when the supports are spaced from the product, and wherein the supporting surface is stationary with respect to the support. This embodiment is characterized in that at the frontal side of the support as seen in the conveying direction at least a freely rotatable roller having an axis of rotation which extends perpendicular to the conveying direction and parallel to the bearing surface is arranged so as to form a gradual transition between the bearing surface and the supporting surface. This is a simple solution to lift the product gradually and to guide it to the bearing surface of the support at low friction. In this embodiment the roller is not necessarily elongated, but several narrow rollers could be applied as well. Due to the combination of disposing a roller at the frontal side of the support and the bearing surface which is stationery with respect to the support it is possible to provide a support which lifts a product very easily by means of a roller which is nearly frictionless and which has a bearing surface having a low friction at the same time so as to prevent a product after it is lifted from easily sliding over the bearing surface and put down at the rear side of the support as a consequence of the speed of the support.

At the rear side of the support as seen in the conveying direction at least a freely rotatable roller including an axis of rotation which extends perpendicular to the conveying direction and parallel to the bearing surface can be arranged so as to form a gradual transition between the bearing surface and the supporting surface. As a consequence, the acceleration of the product in downward direction when placing a product from the support onto the supporting surface can be controlled.

The surface condition of the bearing surface and that of the supporting surface can be such that the friction with a product is lower at the bearing surface than at the supporting surface. As a consequence, a product is easily slided from the bearing surface and placed on the supporting surface as soon as the product is obstructed by the obstruction or by another product which is on the supporting surface.

The conveying member to which the supports are attached may comprise a drivable endless element which is flexible in at least a plane expending parallel to the bearing surface. This is advantageous because the supports can also follow a conveying track in transverse direction, which makes the conveyer more flexible.

The flexible element can be a sidebow chain. This provides a robust and reliable structure.

The conveying member may comprise a belt including slats, which slats extend perpendicular to the conveying direction and parallel to the bearing surface. Furthermore, a plurality of slats disposed closely to each other can each be provided with a roller, hence forming the support.

Preferably, the conveyer is provided with an adjusting mechanism for adjusting the support with respect to the frame in height direction. This means that the conveyer for conveying products having a non-flat bottom can be adjusted, for example.

Furthermore, it is advantageous when the frame is provided with a longitudinal guide which extends parallel to the conveying member above the supporting surface, because this prevents products from falling from the conveyer. Besides, it is easier for the operator to position the product properly onto the conveyer.

In a particular embodiment the frame can be provided with at least a distance keeper for keeping distance between two products which are subsequently conveyed and buffered. The advantage of this is that it becomes easier to take out the product from a series of buffered products.

A simple embodiment of such a distance keeper comprises a pivoting element which is pivotable about an axis of pivoting which extends perpendicular to the conveying direction and parallel to the bearing surface, which pivoting element includes an activating portion at one side thereof spaced from the axis of pivoting and an obstacle portion at the other side spaced from the axis of pivoting, wherein in a passive position the activating portion is at a higher level and the obstacle portion is at a lower level than the bearing surface of the support, whereas in an active position the activating portion is at a lower level and the obstacle portion is at a higher level than the bearing surface. The advantage of this configuration is that a transported product switches the pivoting element from the passive to the active position by itself, such that a new subsequent product is obstructed by the obstacle portion automatically.

The invention will be elucidated further hereinafter by means of drawings which show some embodiments of the conveyor according to the invention schematically.
Fig. 1. is a schematic perspective plan view of a portion of an embodiment of a conveyor for conveying and buffering products.
Fig. 2 shows an enlarged detail II of Fig. 1.
Fig. 3 is a cross-section of the conveyor of Fig. 1 and 2 and a product which is disposed on a support of the conveyor.
Figs. 4a and 4b are very schematic plan views and a longitudinal sectional view of the conveyor, respectively, when it is in operation without products so as to illustrate the operation of the conveyor.
Figs. 5a-5c are each very schematic plan views and a longitudinal sectional view of the conveyor in different positions when it is in operation with products so as to illustrate the conveying of products.
Figs. 6a-6f are very schematic plan views of the conveyor in different positions so as to illustrate the conveying and buffering of products by the conveyor.
Fig. 7 is a very schematic side view of a conveyor which is provided with distance keepers.
Figs. 8a-8c are very schematic plan views of alternative embodiments of a conveyor according to the invention.

The drawings show a conveyor 1 for transporting and buffering products 2. These products 2 may be boxes, crates or other types of bar-shaped or cubic-shaped products. For each application mostly the products will be similar, but this is not necessary. The conveyor 1 is also suitable for conveying products having a limited dimensionally stable shape. The products can be placed onto the conveyor 1 by a person, for example, after which the conveyor transports the products 2 to a buffer zone 3. Here the products 2 are obstructed and buffered, such that another person, for example, can take the products 2 from the conveyor 1 in the buffering zone 3.

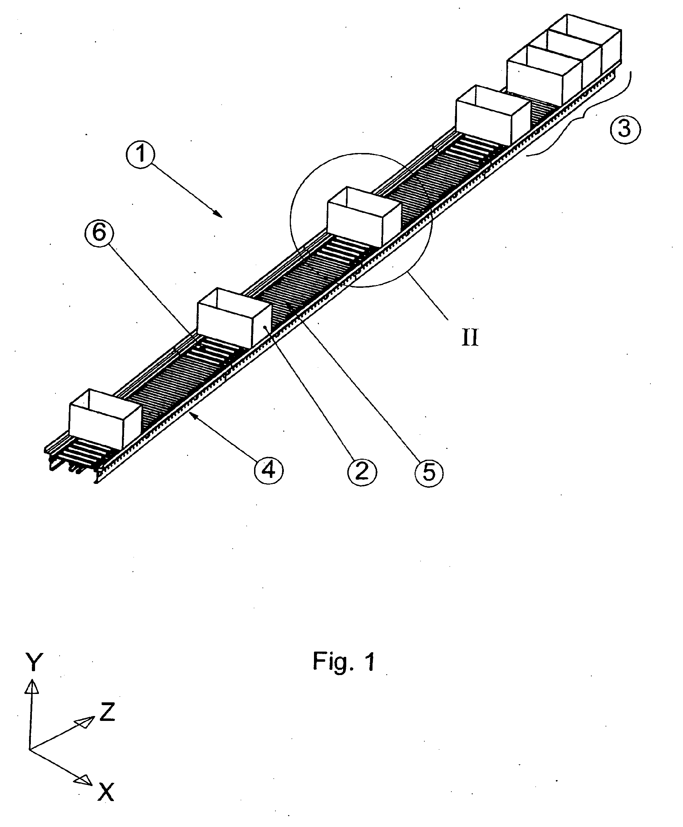

The embodiment of the conveyor 1 such as shown in Fig. 1 comprises a frame 4 and an endless conveying member 5. The conveying member 5 is drivable in longitudinal direction of the frame 4 by an electric motor (not shown).

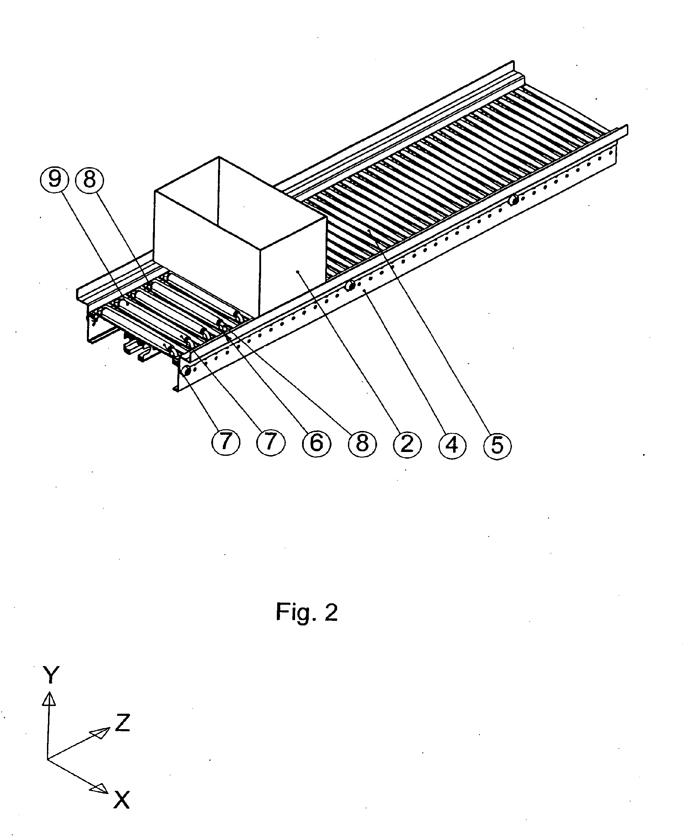

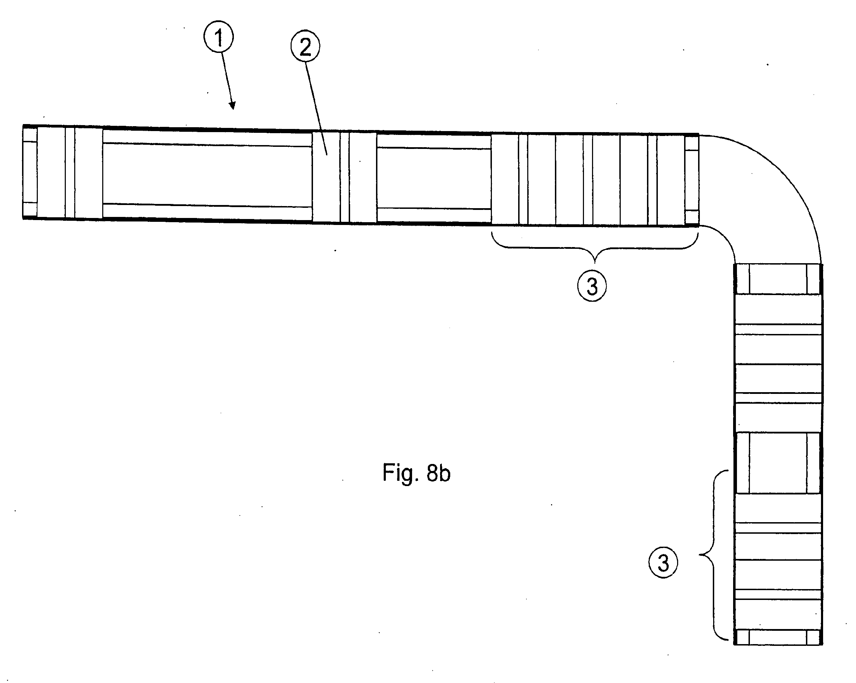

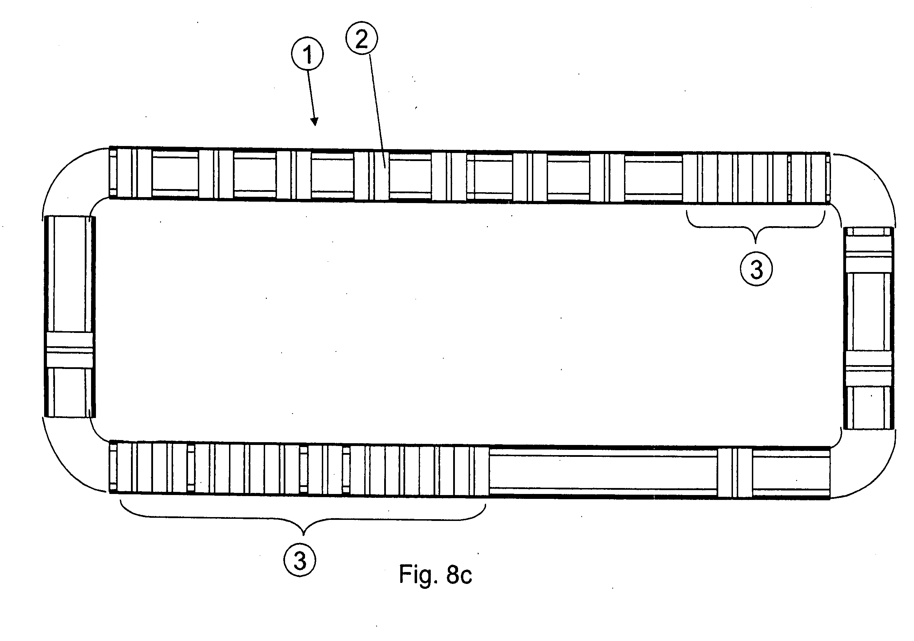

The conveying member 5 can have numerous shapes. In the embodiment such as shown in Fig. 1 and 2 the conveying member 5 comprises a belt including slats, wherein the slats which are attached to a chain or the like extend in transverse direction (direction X) to the conveying direction (direction Z). Preferably, the conveying member 5 comprises a drivable endless element, which is at least flexible in a horizontal plane, thus also in lateral direction with respect to the conveying direction. The flexible element is a sidebow chain, for example. This means that the products 2 can be conveyed through a curved path, as well. The possibility of hollowing a curved path by the conveyor 1 is illustrated in Figs. 8b and 8c.

The conveying member 5 in this embodiment is further provides with supports 6 formed by a set of freely rotatable rollers 7, see Figs. 1 and 2. The support 6 of the embodiment such as shown in the figures is provided witch five rollers, but a higher or smaller number of rollers 7 is also possible. The rollers have an elongated shape so as to create a contact surface with the product 2 which is as large as possible. In order to support the product 2 optimally the support comprises in any case at least three elongated rollers 7 extending parallel to each other and disposed behind each other.

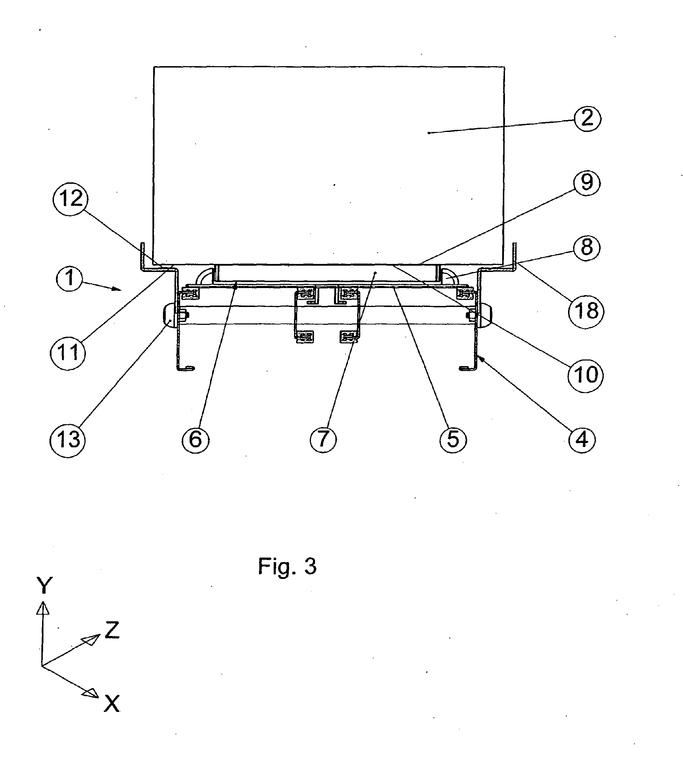

Fig. 2 shows that each roller 7 is carried by two roller bearing members 8, which extend in direction Y from the conveying member 5. Each of the rollers 7 is rotatable about an axis of rotation which extends in direction X. The upper side of the rollers 7 of the support 6 have the function of a bearing surface.9 for carrying the product 2. The product 2 has a born surface 10, which is part of a bottom surface of the product 2 and rests on the bearing surface 9 of the rollers 7 in the supported condition, see Fig. 3. In this case the born surface 10 of the product 2 is in the intermediate part of the bottom surface of the product 2.

When the support 6 is spaced from the product 2 in upward or downward direction the product 2 is carried by the frame 4 and the product 2 has a supported surface 11 resting on a supporting surface 12 of the frame 4. In this case the supporter surface 11 of the product 2 is disposed in side edge portions of the bottom of the product 2. Such as shown in Fig. 3 the born surface 10 of the product 2 in this embodiment is located at the inner side of the supported surface 11 and both surfaces lie in the same plane, such that the bottom of the product 2 is flat.

Fig. 3 further shows that in this embodiment the end portions of each of the rollers 7 are adjacent to the supporting surface 12 and that the supporting surface 12 is formed by two portions of the frame 4 which are spaced from each other and extend in the conveying direction, and between which portions the rollers 7 extend. The length of the rollers extends over the largest part of the distance between the portions of the supporting surface 12. As a consequence, a contact surface between the rollers 7 and the product 2 is created in transverse direction (X) which is as large as possible.

Preferably, the bearing surface 9 of the support 6 lies, higher than the supporting surface 12 of the frame 4, such as shown in Fig. 3. In this embodiment a product 2 having a flat bottom, of which the born surface 10 which is part of the bottom surface and the supported surface 11 thus extend within one plane, such as in case of a rectangular box, is maintained above the supporting surface 12 of the frame 4 by the support 6 in the supported condition. As a consequence, the product 2 does not have friction with the supporting surface 12 of the frame 4 during conveying.

The conveying member 5 could also consist of two or more endless belts, chains or the like extending in longitudial direction, wherein separate parts of the support 6 are arranged on each thereof (not shown). In this case the separate parts together form the bearing surface 9. Possibly the supporting surface 12 also extends between the parallel belt, chains or the like. This means that a supporting surface 12 is created which supports the product 2 on several locations, which makes it possible to convey and buffer also products having a limited dimensionally stable shape with the conveyor 1. With this configuration it is prevented, for example, that a sagging product would be dragged by the conveying member 5 before a support 6 has been arrived at the product. Examples of such products are packages of which the bottom sags a bit, such as shrink packs or PET bottles, and bundles of newspapers, for example.

Although Fig. 3 shows an embodiment having one roller 7 between the portions of the supporting surface 12, several rollers 7 may be disposed behind each other as seen along the center lines of these rollers 7 (not shown). Each of these rollers can be supported by two supporting members or roller bearing members 8, which are spaced axially of the rollers 7. As a consequence, the forces of the rollers 7.can be distributed better over a slat than in the case of one roller per slat, such as shown in Fig. 3.

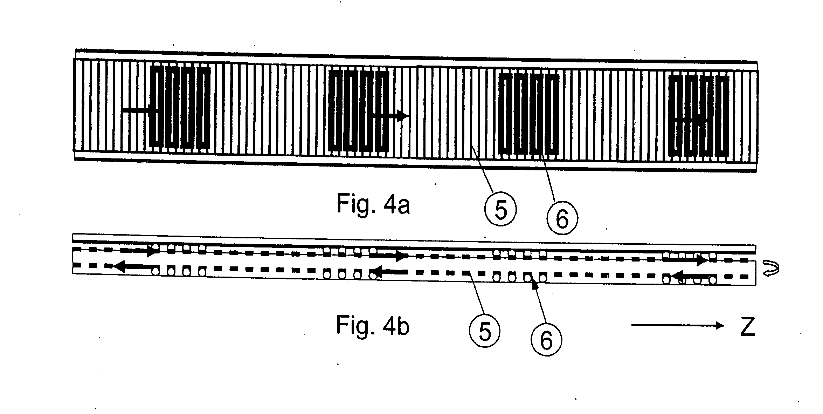

In the embodiment of Fig. 1 it can be seen that the conveyor 1 is provided with a conveying member 5 to which several supports 6 are attached. When the conveying member 5 is driven the supports 6 will be moved synchronously in the conveying direction (direction Z). This is shown very schematically in Fig. 4a (as seen from the top side) and Fig. 4b (as seen from the side). Such as shown in Fig. 4b an upper part of the conveying member 5 in this embodiment moves at the upper side of the conveyor 1 in the conveying direction and a lower part just below the upper part moves opposite to the conveying direction. As a consequence, the supports 6 which are in the upper part move in the conveying direction.

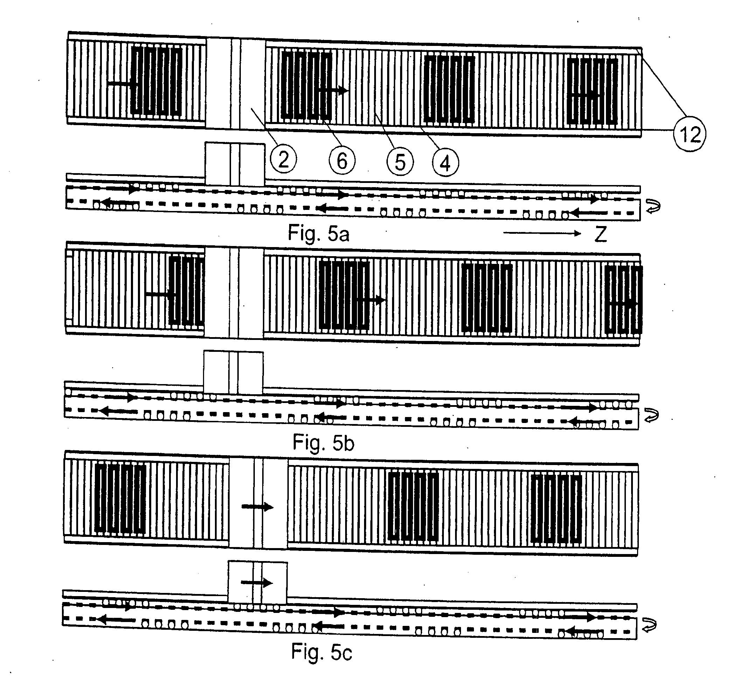

Fig. 5 illustrates very schematically how a product 2 is conveyed in the conveying direction by a support. When a product 2 is placed on the supporting surface 12 of the frame 4 and a support 6 approaches the product in the conveying direction the support 6 will hit the product 2 at a certain moment. Since the bearing surface 9 of the support 6 is at a higher level than the supporting surface 12 such as shown in Fig. 3, the product 2 will be lifted by the support 6 at the corresponding side. The freely rotatable rollers 7 of the support 6 will roll along the bottom of the product 2 and lift the product 2 further until the product is entirely free from the supporting surface 12 of the frame 4. This means that the product 2 stays resting on the rollers 7 of the support 6 and the product 2 can be conveyed in the conveying direction at the same speed as that of the conveying member 5.

This process can be optimized by adjusting the speed of the conveying member 5 and the properties of the supports 6, the frame 4 and the products 2 with respect to each other. For example, a too high speed of the conveying member 5 may result in continued rolling of the product over the support 6 such that the product 2 is again placed on the supporting surface 12 of the frame 4 at the rear side of the support 6. Of course, the speed of the supports 6 is also determined by the number of the products 2 which are placed on the frame 4 per unit of time and the number of supports 6 of the conveying member 5. A practical speed of the supports is about 18 meters per minute. Preferably, the bearing surface 9 of the rollers 7 with respect to the supporting surface 12 of the frame 4 is also such that the lifting movement of the support 6 develops gradually. In the embodiment such as shown in Fig. 3 the conveyor 1 is provided with an adjusting mechanism 14, which is adapted to adjust the supporting surface 12 with respect to the frame 4 in the direction Z. This means that the height difference between the bearing surface 9 of the support 6 and the supporting surface 12 can be minimized.

In order to make the movement of lifting as gradual as possible each of the supports 6 is at its frontal side facing the conveying direction preferably provided with a guiding surface which extends downwards from the bearing surface 9 of the support 6 to at least the height level of the supporting surface 12 of the frame 4, wherein the guiding surface has a normal having a vertical component. In the embodiment such as shown in Fig. 1-3 the guiding surface is formed by a portion of the surface of the front roller 7 which contacts the product 2 first.

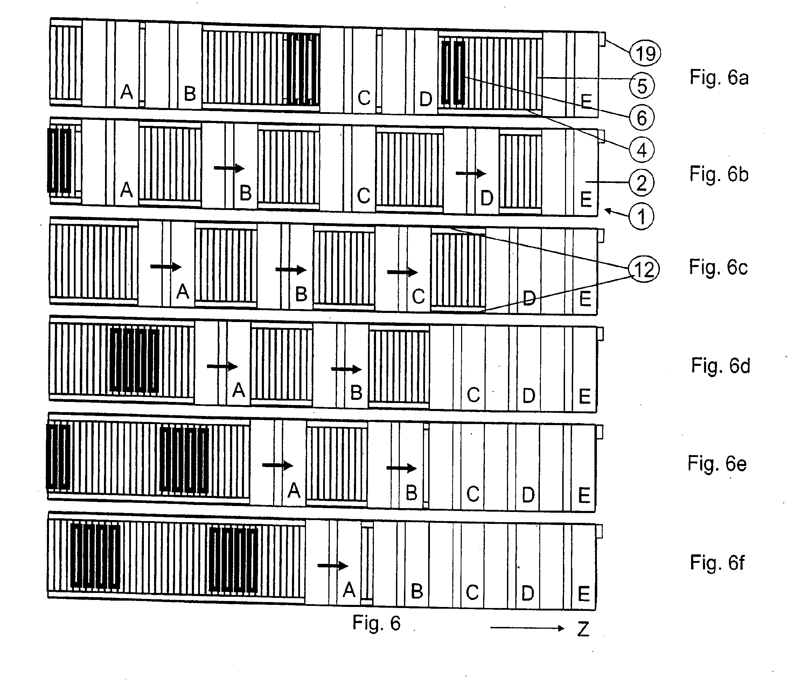

In Figs. 6a - 6f it is illustrated by different time periods how the conveyor 1 operates according to the depicted embodiment when several products 2 are placed in series in the longitudinal direction (direction Z) on the supporting surface 12 of the frame 4. For that, the products 2 in Fig. 6 are referred to by letters A to E. Fig. 6a shows two pairs of products A-B and C-D, which are placed behind each other on the frame 4 and one product E which has already been buffered at the end of the conveyor 1 at the right side where the product E is obstructed by an obstruction 19. Fig. 6b shows how a number of the products 2 are conveyed to the right by the supports 6 of the conveying member 5. The supports 6 moving to the right will lift the products A and C located at the left of the two pairs, which are shown, first. The products A and C, however, will not be taken with the transport track 5, because they are obstructed by the products B and D at the right side of the two product pair. The supports 6 will then move below the products A and C of the pairs at the left side to the right, which means that the products A and C at the left side will move downwardly again onto the frame 4 and the products B and D at the right side of the pairs will be lifted.

In the conveying direction (direction Z) are no obstacles just behind the products B and D which are lifted now, so the supports 6 will take the products B and D into the conveying direction. The product B will then be obstructed by product C and be placed onto the frame 4, after which the corresponding support 6 will lift the product C and take it away, see Fig. 6c. In the mean time product D approaches the right end of the conveyor 1, where the product E will obstruct product D. Figs. 6d-6f show that all products 2 are conveyed in this manner into the conveying direction to the right end of the conveyor 1.

From the foregoing it will be clear that when a product 2 being on the support 6 is obstructed by an obstacle, such as another product 2 which is on the frame 4, the support 6 moves further below the obstructed product 2. In the case that the obstacle is another product 2 it is desired that the other product 2 is not pushed ahead over the supporting surface 12, but provides sufficient resistance. Therefore, the supporting surface 12 may be provided with an anti-slip surface (not shown).

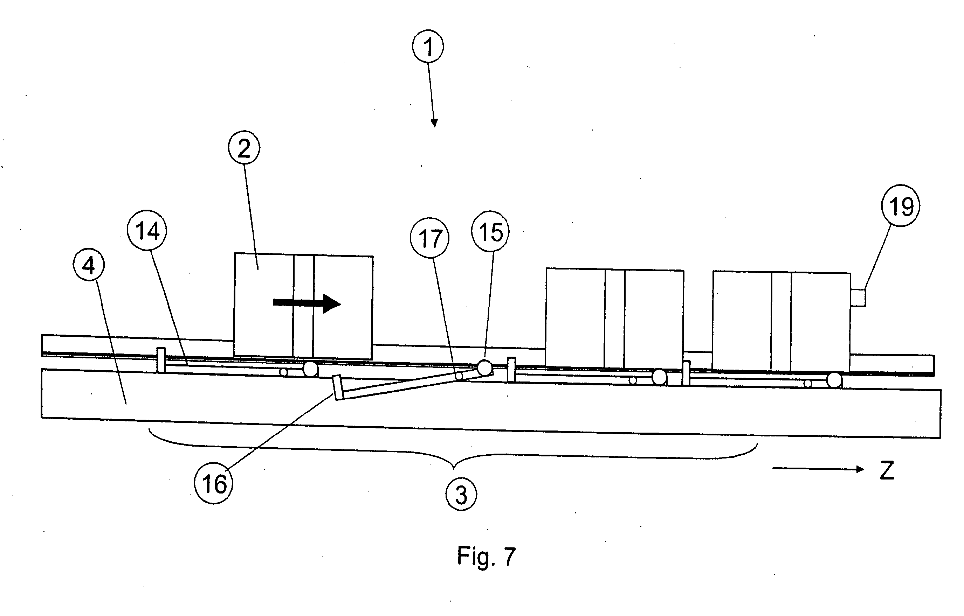

Fig. 7 shows an alternative embodiment of the buffer zone 3 of the conveyor 1. In this drawing distance keepers 14 are shown which are connected to the frame 4. The distance keepers 14 each comprise an elongated lever-shaped member, which extends in longitudinal direction of the conveyor 1 and is disposed below a path followed by the products 2. The distance keeper 14 of the embodiment such as shown in Fig. 7 includes an activating portion 15 at the right end thereof and an obstacle portion 16 at the left end thereof. The distance keeper 14 has a passive position such as the only obliquely positioned distance keeper 14 in Fig. 7, which is not in contact with a product 2. In this passive position the activating portion 15 extends above the supporting surface 12 of the support 6 and the obstacle portion 16 below of that.

As soon as a product 2 moving in the conveying direction (direction Z) hits the activating portion 15 the distance keeper 14 is rotated clockwise about an axis of pivoting 17 and the obstacle portion 16 moves upwardly such that this extends above the supporting surface 9. As a result, the distance keeper 14 is put in the active position wherein the obstacle portion 16 will obstruct an approaching product in the conveying direction 2. This situation is shown in Fig. 7 for the distance keeper 14 which is disposed at the most right side. The advantage of the distance keepers is that the products 2 are not positioned against each other in the buffer zone 3 which might make taking out a product 2 from between a series of products 2 in the buffer zone 3 more difficult. The distance keepers 14 make it possible to take out a product 2 easily from the series. When a product 2 which is already buffered, is taken up the distance keeper 14 may rotate from the active to the passive position since the activating portion 15 cannot be pushed downwardly longer by a product 2, The automatic movement in backward direction from the active to the passive position may be achieved by positioning the axis of pivoting 17 eccentrically with respect to the activating portion 15 and the obstacle portion 16, for example, such as shown in Fig. 7 or making the side of the obstacle portion 16 more heavily than the side of the activating portion 15 when the axis of pivoting 17 is disposed centrally between both portions 15, 16 (not shown).

It is also possible to apply the distance keepers 14 in case of a conventional conveying member, wherein the products are placed on a moving track such as an endless belt, for example which is provided with freely rotatable rollers over its entire length (not shown). Without distance keepers buffering would lead to thrust on the buffered products since the rollers roll along the bottom side of all obstructed products at the same time. Applying the distance keepers means that now only each single product applies a pressure on the distance keeper.

In order to prevent that products 2 are pushed from the frame 4 the frame can be provided with an edge 18 disposed upwardly which functions as a longitudinal guide, see Fig. 3. This makes it more easy for an operator to position a product 2 on the proper place on the frame 4 to be conveyed from there.

Since the conveyor 1 as shown in the drawings only conveys a limited number of products 2 at the same time only a limited driving power for driving the conveying member 5 is required. For example, it is sufficient to install only one driving motor per hundred meter length of the conveyor 1.

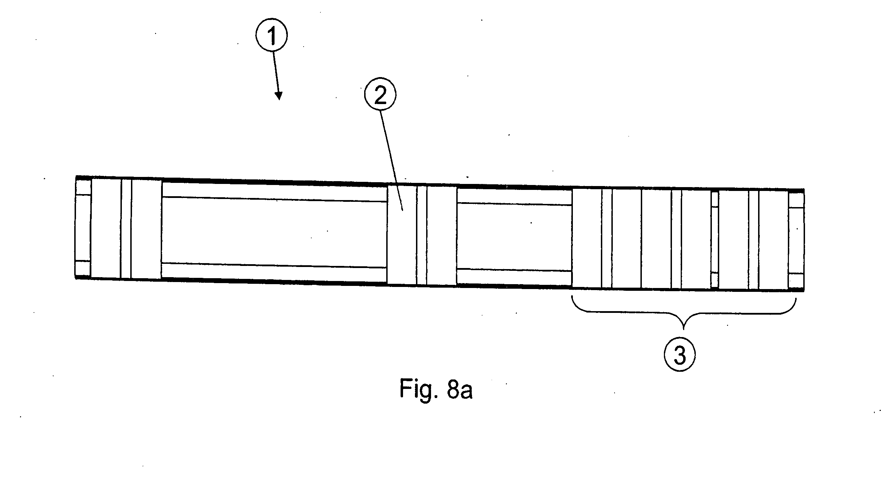

Figs. 8a...8c show different embodiments of the conveyor 1. Fig. 8a shows a simple embodiment wherein the products 2 are conveyed in a single conveying direction. In the embodiment as shown in Fig. 8b the conveyor 1 includes a curve and the conveyor 1 is provided with two buffer zones 3.

In Fig. 8c the conveyor is arranged such that products 2 are conveyed in opposite directions to separate buffer zones 3.

Instead of rollers 7 also other types of supports 6 are conceivable, such as a structure having a smooth surface, which is provided at the frontal side, as seen in the conveying direction, with a guiding surface which extends downward from the bearing surface 9 to at least the height of the supporting surface 12. This guiding surface develops gradually in order to lift products 2 in a gradual manner. According to the invention the bearing surface 9 is stationary with respect to the support 6. The guiding surface has a smoother surface than the supporting surface 12. The bearing surface 9 can also be smoother than the supporting surface 12. Possibly the guiding surface and the bearing surface 9 are arranged such that they form a single continuous plane.

The guiding surface and/or the bearing surface 9 preferably extend, such as the case with the embodiment having the elongated rollers 7, between the largest part of the distance between the portions of the supporting surface 12.

According to the invention, the frontal side of the support 6 is provided with a freely rotatable roller extending perpendicular to the conveying direction and parallel to the bearing surface 9 (not shown) so as to facilitate lifting and/or putting down of a product 2 at the frontal and/or rear side of the support 6. Such a roller causes a gradual lifting or puting down of a product 2. A freely rotatable roller can also be easily constructed in such a way that its resistance is low such that the product 2 rather tends to be lifted than being pushed ahead when it contacts an approaching support.

From the foregoing it will be clear that the invention provides a simple but effective conveyor for conveying and buffering products at a lower thrust, wherein the conveyor is also suitable for conveying products having a limited dimensionally stable shape.

The invention is not limited two the embodiments depicted in the drawings and described hereinbefore, which can be varied in different ways within the scope of the invention as stated by the appended claims. For example, it is not necessary that the product 2 has a flat bottom. The conveyor 1 can also be arranged such that the height difference between the bearing surface 9 of the support 6 and the supporting surface 12 of the frame 4 is adjusted to the height difference between the born surface 10 and the supporting surface 11 of the bottom of the product 2.

## Claims

1. Conveyor (1) for conveying and buffering of products (2) which is provided with a frame (4), a plurality of movable supports which are supported by the frame (4) and movable by driving means with respect to the frame (4) in a conveying direction, which supports are spaced from each other and connected to each other and each of the supports can support at least one product (2) on a bearing surface (9) of the support (6), and an obstruction (19) for obstructing a first product (2) in the conveying direction, wherein the frame (4) is provided with a supporting surface (12) and the supports (6) and the supporting surface (12) are adapted such and are positioned with respect to each other such that the product (2) is free from the supporting surface (12) when the product (2) is carried by one of the supports (6) and rests on the supporting surface (12) when the supports (6) are spaced from the product (2), **characterized in that** the bearing surface (9) is stationary with respect to the support (6), and at the frontal side of the support (6) as seen in the conveying direction at least a freely rotatable roller having an axis of rotation extending perpendicular to the conveying direction and parallel to the bearing surface (9) is arranged so as to create a gradual transition between the bearing surface (9) and the supporting surface (12).

2. Conveyor (1) according to claim 1, wherein at the rear side of the support (6) as seen in the conveying direction at least a freely rotatable roller having an axis of rotation extending perpendicular to the conveying direction and parallel to the bearing surface (9) is arranged so as to create a gradual transition between the bearing surface (9) and the supporting surface (12).

3. Conveyor (1) according to claim 1 or 2, wherein the surface condition of the bearing surface (9) and that of the supporting surface (12) is such, that the friction with a product (2) is lower at the bearing surface (9) than at the supporting surface (12).

4. Conveyor (1) according to one of the preceding claims, wherein the conveying member (5) comprises a belt including slats, which slats extend perpendicular to the conveying direction and parallel to the bearing surface (9).

5. Conveyor (1) according to one of the preceding claims, wherein the conveyor (1) is provided with an adjusting mechanism (13) for adjusting the support (6) with respect to the frame (4) in height direction.

6. Conveyor (1) according to one of the preceding claims, wherein the frame (4) is provided with at least a distance keeper for keeping distance between two products (2) which are subsequently conveyed and buffered.

7. Conveyor (1) according to one of the preceding claims, wherein the conveying member (5) to which the supports (6) are attached comprises a drivable endless element, which is flexible in at least a plane extending parallel to the bearing surface (9).

8. Conveyor (1) according to claim 7, wherein the flexible element is a sidebow chain.

9. Conveyor (1) according to one of the preceding claims, wherein the frame (4) is provided with a longitudinal guide which extends parallel to the conveying member above the supporting surface.

10. Conveyor (1) according to one of the preceding claims, wherein the roller and/or the bearing surface (9) extend between the largest part of the distance between the portions of the supporting surface (12).

11. Conveyor (1) according to one of the preceding claims, wherein at the frontal side of the support (6) as seen in the conveying direction an elongated roller is arranged or several narrow rollers are arranged.

## Patentansprüche

1. Fördereinrichtung (1) zum Befördern und Zwischenspeichern von Produkten (2), die versehen ist mit einem Rahmen (4), einer Mehrzahl von bewegbaren Stützen, die durch den Rahmen (4) abgestützt sind und mittels Antriebsmitteln bezüglich des Rahmens (4) in einer Förderrichtung bewegbar sind, wobei die Stützen im Abstand voneinander angeordnet und miteinander verbunden sind und jede der Stützen mindestens ein Produkt (2) auf einer Auflagefläche (9) der Stütze (6) abstützen kann, und ein Hindernis (19) zum Behindern eines ersten Produktes (2) in der Förderrichtung, wobei der Rahmen (4) mit einer Stützfläche (12) versehen ist und die Stützen (6) und die Stützfläche (12) derart angepasst und bezüglich einander angeordnet sind, dass das Produkt (2) von der Stützfläche (12) frei ist, wenn das Produkt (2) von einer der Stützen (6) getragen wird, und auf der Stützfläche (12) aufliegt, wenn die Stützflächen (6) im Abstand von dem Produkt (2) angeordnet sind, **dadurch gekennzeichnet, dass** die Auflagefläche (9) bezüglich der Stütze (6) ortsfest ist und an der Stirnseite der Stütze (6) in der Förderrichtung betrachtet mindestens eine frei drehbare Rolle, die eine sich senkrecht zu der Förderrichtung und parallel zu der Auflagefläche (9) erstreckende Rotationsachse aufweist, angeordnet ist, um einen allmählichen Übergang zwischen der Auflagefläche (9) und der Stützfläche (12) zu erzeugen.

2. Fördereinrichtung (1) gemäß Anspruch 1, wobei an der Rückseite der Stütze (6) in der Förderrichtung betrachtet mindestens eine frei drehbare Rolle, die eine sich senkrecht zu der Förderrichtung und parallel zu der Auflagefläche (9) erstreckende Rotationsachse aufweist, angeordnet ist, um einen allmählichen Übergang zwischen der Auflagefläche (9) und der Stützfläche (12) zu erzeugen.

3. Fördereinrichtung (1) gemäß Anspruch 1 oder 2, wobei die Oberflächenbeschaffenheit der Auflagefläche (9) und die der Stützfläche (12) derart sind, dass die Reibung mit einem Produkt (2) an der Auflagefläche (9) geringer als an der Stützfläche (12) ist.

4. Fördereinrichtung (1) gemäß einem der vorhergehenden Ansprüche, wobei das Förderelement (5) ein Latten aufweisendes Band aufweist, wobei sich die Latten senkrecht zu der Förderrichtung und parallel zu der Auflagefläche (9) erstrecken.

5. Fördereinrichtung (1) gemäß einem der vorhergehenden Ansprüche, wobei die Fördereinrichtung (1) mit einem Verstellmechanismus (13) zum Verstellen der Stütze (6) bezüglich des Rahmens (4) in Höhenrichtung versehen ist.

6. Fördereinrichtung (1) gemäß einem der vorhergehenden Ansprüche, wobei der Rahmen (4) mit mindestens einem Abstandshalter versehen ist, um den Abstand zwischen zwei Produkten (2) zu halten, die nacheinander befördert und zwischengespeichert werden.

7. Fördereinrichtung (1) gemäß einem der vorhergehenden Ansprüche, wobei das Förderelement (5), an dem die Stützen (6) angebracht sind, ein antreibbares Endloselement aufweist, das wenigstens in einer sich parallel zu der Auflagefläche (9) erstreckenden Ebene flexibel ist.

8. Fördereinrichtung (1) gemäß Anspruch 7, wobei das flexible Element eine Seitenbogenkette ist.

9. Fördereinrichtung (1) gemäß einem der vorhergehenden Ansprüche, wobei der Rahmen (4) mit einer Längsführung versehen ist, die sich über der Stützfläche parallel zu dem Förderelement erstreckt.

10. Fördereinrichtung (1) gemäß einem der vorhergehenden Ansprüche, wobei die Rolle und/oder die Auflagefläche (9) sich zwischen dem größten Teil des Abstandes zwischen den Abschnitten der Stützfläche (12) erstrecken/erstreckt.

11. Fördereinrichtung (1) gemäß einem der vorhergehenden Ansprüche, wobei an der Stirnseite der Stütze (6) in der Förderrichtung betrachtet eine längliche Rolle angeordnet ist oder mehrere schmale Rollen angeordnet sind.

## Revendications

1. Convoyeur (1) dévolu à l'acheminement et à l'amortissement de produits (2), comprenant un bâti (4), une pluralité de supports mobiles qui sont soutenus par ledit bâti (4) et peuvent être mus dans une direction de convoyage par rapport audit bâti (4), par des moyens d'entraînement, lesdits supports étant espacés les uns des autres et reliés les uns aux autres, et chacun desdits supports pouvant supporter au moins un produit (2) sur une surface d'appui (9) dudit support (6), et un arrêtoir (19) conçu pour arrêter un premier produit (2) dans la direction de convoyage, sachant que le bâti (4) est pourvu d'une surface de support (12), et que les supports (6) et ladite surface de support (12) sont agencés, et mutuellement positionnés de telle sorte que le produit (2) soit dégagé de la surface de support (12) lorsque ledit produit (2) est porté par l'un des supports (6), et repose sur ladite surface de support (12) lorsque lesdits supports (6) sont espacés dudit produit (2), **caractérisé par le fait que** la surface d'appui (9) est stationnaire vis-à-vis du support (6) ; et, sur le côté antérieur dudit support (6) en considérant dans la direction de convoyage, au moins un rouleau à rotation libre, muni d'un axe de rotation s'étendant perpendiculairement à la direction de convoyage et parallèlement à la surface d'appui (9), est agencé de manière à créer une transition progressive entre ladite surface d'appui (9) et ladite surface de support (12).

2. Convoyeur (1) selon la revendication 1, dans lequel, sur le côté postérieur du support (6) en considérant dans la direction de convoyage, au moins un rouleau à rotation libre, muni d'un axe de rotation s'étendant perpendiculairement à la direction de convoyage et parallèlement à la surface d'appui (9), est agencé de manière à créer une transition progressive entre ladite surface d'appui (9) et la surface de support (12).

3. Convoyeur (1) selon la revendication 1 ou 2, dans lequel l'état de la surface d'appui (9) et celui de la surface de support (12) sont tels que le frottement, avec un produit (2), soit moindre sur ladite surface d'appui (9) que sur ladite surface de support (12).

4. Convoyeur (1) selon l'une des revendications précédentes, dans lequel l'élément de convoyage (5) comprend une courroie comportant des lamelles, lesquelles lamelles s'étendent perpendiculairement à la direction de convoyage et parallèlement à la surface d'appui (9).

5. Convoyeur (1) selon l'une des revendications précédentes, ledit convoyeur (1) étant doté d'un mécanisme de réglage (13) dédié au réglage du support (6) vis-à-vis du bâti (4), dans le sens de la hauteur.

6. Convoyeur (1) selon l'une des revendications précédentes, dans lequel le bâti (4) est muni d'au moins un élément de maintien d'espacement, en vue d'entretenir la distance entre deux produits (2) subséquemment convoyés et amortis.

7. Convoyeur (1) selon l'une des revendications précédentes, dans lequel l'élément de convoyage (5), auquel les supports (6) sont rattachés, comprend un élément sans fin qui peut être entraîné et est doué de flexibilité dans au moins un plan s'étendant parallèlement à la surface d'appui (9).

8. Convoyeur (1) selon la revendication 7, dans lequel l'élément flexible est une chaîne à inflexion latérale.

9. Convoyeur (1) selon l'une des revendications précédentes, dans lequel le bâti (4) est pourvu d'un guide longitudinal qui s'étend parallèlement à l'élément de convoyage, au-dessus de la surface de support.

10. Convoyeur (1) selon l'une des revendications précédentes, dans lequel le rouleau, et/ou la surface d'appui (9), s'étend(ent) sur la majeure partie de la distance comprise entre les régions constituant la surface de support (12).

11. Convoyeur (1) selon l'une des revendications précédentes, dans lequel un rouleau allongé, ou plusieurs rouleaux étroits, est (sont) implanté(s) sur le côté antérieur du support (6) en considérant dans la direction de convoyage.
